# EUROPEAN PATENT SPECIFICATION

(11) **EP 3 799 585 B1**
(45) Date of publication and mention of the grant of the patent: **06.04.2022**
(21) Application number: 19783694.3
(22) Date of filing: 13.09.2019
(51) Int. Cl.: B29C 49/64, B29C 49/68, B29C 49/06, B29L 31/00

(54) **HEATING APPARATUS FOR HEATING PARISONS OF THERMOPLASTIC MATERIAL**
VORRICHTUNG ZUR ERWÄRMUNG VON VORFORMLINGEN AUS THERMOPLASTISCHEM MATERIAL
APPAREIL DE CHAUFFAGE POUR CHAUFFER DES PARAISONS EN MATÉRIAU THERMOPLASTIQUE

(30) Priority: 05.12.2018 IT 201800010825
(43) Date of publication of application: 07.04.2021
(73) Proprietor: Gea Procomac S.p.A., 43038 Sala Baganza (PR) (IT)
(72) Inventor: ABELLI, Paolo, 43038 Sala Baganza (Parma) (IT); PARROZZANI, Marco, 43038 Sala Baganza (Parma) (IT)
(74) Representative: Dondi, Silvia
(86) International application number: PCT/IB2019/057741
(87) International publication number: WO 2020/115575

(56) References cited:
- EP-A1- 2 425 959
- US-A- 4 147 487
- US-A1- 2007 096 352

## Description

### Technical field

The present invention relates to a heating apparatus for heating parisons of thermoplastic material.

As is known, the forming of containers of thermoplastic material takes place starting from the previously heated parison.

At the state of the art, ovens are known for heating the parisons by means of radiation in the infrared or near-infrared spectrum.

The document EP2425959 discloses a tunnel in which the parisons move forward where the emitters are positioned in parallel rows that extend on opposite sides with respect to the direction along which the parisons move forward so as to radiate the latter on both sides.

Alternatively, the direct radiation can take place on one side only, while on the side opposite the direction along which the parisons move forward there is a reflector that gives rise to so-called "secondary" radiation towards the parisons.

However, only a part of the radiation is reflected on the body of the parisons. In fact, there is always a percentage of radiation that is absorbed by the reflector or which is reflected in different directions with respect to the parisons.

To increase the reflection efficiency, the position of the reflector, its geometry or the choice of materials that constitute it can be acted on.

### Background art

The solutions that maximise efficiency on the basis of the mutual positioning of the emitters and reflectors and/or the geometry of the latter risk having a strong impact from the spatial point of view, increasing the overall dimensions or placing constructive constraints that make the solution less flexible.

As regards the choice of materials, to date reflectors are known made of ceramics or aluminium.

Specifically, the materials with high reflective properties in the infrared region are silver, gold and aluminium, which manifest an emissivity comprised between 0.01 and 0.1 for wavelengths ranging between 1 µm and 3 µm.

However, the reflective capability of these metals is reduced over time due to oxidation caused by exposure to air.

The use of anodised aluminium to contrast the oxidation is also known. However, this solution also increases the emissivity, thus the absorbed power.

### Disclosure of the invention

In this context, the technical task underpinning the present invention is to provide a heating apparatus for heating parisons of thermoplastic material that obviates the drawbacks of the prior art mentioned above.

In particular, an object of the present invention is to provide a heating apparatus for heating parisons of thermoplastic material whose efficiency does not degrade over time.

The defined technical task and the specified aims are substantially achieved by a heating apparatus for heating parisons of thermoplastic material, comprising:
- a tunnel in which the parisons move forward along a predefined direction;
- a plurality of infrared or near infrared emitters located inside the tunnel in such a way as to radiate the parisons moving forward;
- at least one reflector having a metallic substrate, the reflector being positioned in such a way as to receive at least partially the radiations emitted by the infrared emitters to reflect them,
characterised in that the metallic substrate of the reflector is coated by an external layer made of polysilazane or polysiloxane.

In particular, the metallic substrate is constituted by one of the following elements: silver, gold, aluminium, platinum, rhodium, tantalum, molybdenum, tungsten.

Preferably, the reflector is positioned inside the tunnel.

The infrared emitters are configured to emit radiation in the infrared or near infrared spectrum, that is with a wavelength comprised between 0.7 µm and 5 µm.

In accordance with one embodiment, the infrared emitters and the reflector are positioned in the same side with respect to the predefined direction along which the parisons move forward.

In accordance with another embodiment, the infrared emitters and the reflector are positioned in opposite sides with respect to the predefined direction along which the parisons move forward.

In accordance with another embodiment, the reflector develops in a lower zone of the tunnel.

For example, the reflector has the shape of a planar plate obtained by the overlapping of the metallic substrate and the external layer.

Alternatively, the reflector has the form of a multiple parabola obtained by the overlapping of the metallic substrate and the external layer.

In accordance with a further embodiment, the apparatus comprises a box-like body delimiting the tunnel. The box-like body has an opening configured to allow the neck of the parisons that move forward in the tunnel to remain outside the tunnel. The reflector develops at least partially near the opening of the box-like body.

In accordance with another embodiment, the apparatus comprises a gripping organ for each parison. The gripping organ is operatively active on the neck of the parison to support it while it moves forward in the tunnel. Each gripping organ is integrally fixed to a corresponding reflector. Preferably, in various embodiments, the external layer of polysilazane or polysiloxane has a thickness comprised between 1 µm and 30 µm.

More preferably, the thickness is comprised between 1 µm and 5 µm.

### Brief description of drawings

Further characteristics and advantages of the present invention will more fully emerge from the non-limiting description of a preferred but not exclusive embodiment of a heating apparatus for heating parisons of thermoplastic material, as illustrated in the accompanying drawings, in which:
- figure 1 shows a first embodiment of a heating apparatus for heating parisons of thermoplastic material, in accordance with the present invention, in a sectioned lateral view;
- figure 2 shows a second embodiment of the heating apparatus, in accordance with the present invention, in a sectioned lateral view;
- figure 3 shows a third embodiment of the heating apparatus, in accordance with the present invention, in a sectioned lateral view;
- figure 4 shows a fourth embodiment of a heating apparatus, in accordance with the present invention, in a sectioned lateral view;
- figure 5 shows a fifth embodiment of the heating apparatus, in accordance with the present invention, in a sectioned lateral view;
- figure 6 shows a sixth embodiment of the heating apparatus, in accordance with the present invention, in a sectioned lateral view;

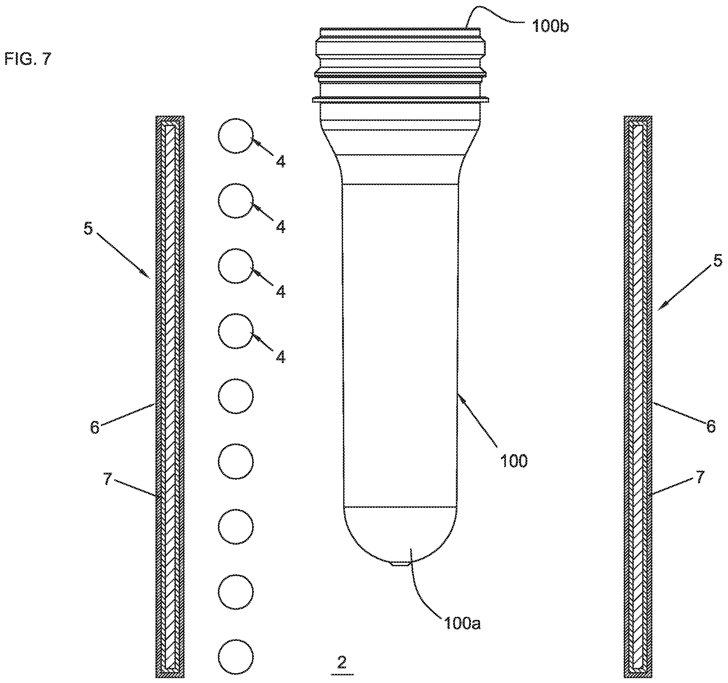

- figure 7 schematically shows some elements of the apparatus of figure 1, in a sectioned lateral view.

### Detailed description of preferred embodiments of the invention

With reference to the figures, a heating apparatus 1 for heating parisons 100 of thermoplastic material, for example PET, is indicated by the number 1.

A parison 100 has a tubular body 100a and a threaded neck 100b. The heating is directed to the tubular body 100a, which must be brought to a temperature such as to allow the subsequent forming of the container, for example by stretch-blow moulding.

The neck 100b, however, is not subjected to processing.

The heating apparatus 1 comprises a tunnel 2 in which the parisons 100 move forward along a predefined direction.

Preferably, the tunnel 2 is delimited by a box-like body 3 comprising at least two side walls 3a, 3b parallel to each other and substantially parallel to the predefined direction in which the parisons 100 move forward.

The box-like body 3 is open in the upper zone in such a way as to allow the neck 100b of the parisons 100 which move forward in the tunnel 2 to remain outside of the heating zone. In fact, as already mentioned, the neck 100b of the parisons 100 is not subjected to processing.

While they move forward in the tunnel 2, the parisons 100 are supported by their neck 100b by means of a known type, such as guides or side rails or gripping bells on the bague, etc.

In this context, the technical term "bague" relates to a circumferential protuberance of the neck 100b of the parison 100, located below the threaded zone of the neck 100b.

In the embodiments described and illustrated herein, each parison 100 is supported by a corresponding gripping organ 20 operatively active on its neck 100b to support the parison 100 while it moves forward in the tunnel 2.

Preferably, while each parison 100 moves forward, it rotates on itself in such a way as to allow uniform radiation of its tubular body 100a.

A plurality of infrared emitters 4 that is, radiation emitters in the infrared spectrum (wavelength comprised between 700 nm and 1 mm) is located inside the tunnel 2.

In one embodiment, the infrared emitters 4 are configured to emit radiation in the so-called "NIR", acronym for "Near Infrared Region" spectrum, that is, with a wavelength comprised between 0.7 µm and 5 µm.

In particular, the infrared emitters 4 develop laterally to the parisons 100 moving forward along the predefined direction so as to radiate their tubular body 100a.

In the embodiments described and shown herein, the infrared emitters 4 all develop on the same side with respect to the predefined direction. In particular, the infrared emitters 4 are positioned near of one of the side walls 3a, 3b of the box-shaped body 3, hereinafter referred to as the first side wall 3a. The other side wall, indicated by 3b, is hereinafter called "second side wall".

Preferably, the infrared emitters 4 are arranged in parallel rows that follow the development of the first side wall 3a.

The heating apparatus 1 comprises at least one reflector 5 positioned in such a way as to receive at least partially the radiation emitted by the infrared emitters 4, either directly or indirectly.

The reflector 5 has a metallic substrate 6 constituted by one of the following elements: silver, gold, aluminium, platinum, rhodium, tantalum, molybdenum, tungsten.

Advantageously, the metallic substrate 6 is coated by an external layer 7 made of polysilazane or polysiloxane.

Preferably, the external layer 7 has a thickness comprised between 1 µm and 30 µm.

More preferably, the external layer 7 has a thickness comprised between 1 µm and 5 µm.

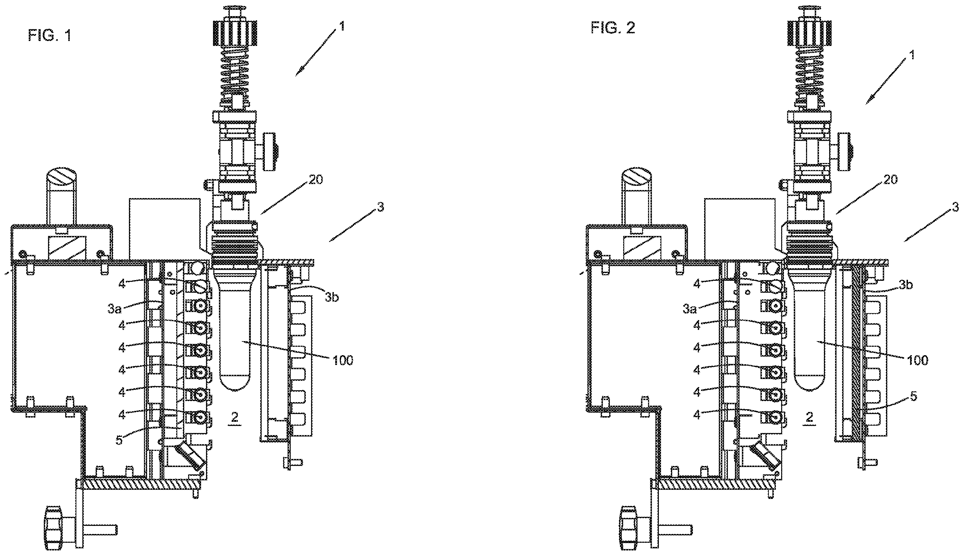

In accordance with a first embodiment illustrated in figure 1, the infrared emitters 4 and the reflector 5 are positioned in the same side with respect to the predefined direction along which the parisons 100 move forward.

In particular, both the infrared emitters 4 and the reflector 5 are located near the first side wall 3a.

In this embodiment, the reflector 5 has the shape of a planar plate obtained by overlapping the metallic substrate 6 and the external layer 7, which completely surrounds the metallic substrate 6.

In an alternative embodiment (not shown), the reflector 5 has the shape of an inclined plate or multiple parabola.

The infrared emitters 4 are interposed between the reflector 5 and the predefined direction along which the parisons 100 move forward in such a way that the radiation emitted by the infrared emitters 4 in the opposite direction to the parisons 100 is reflected towards the parisons 100. This placement of the reflector 5 therefore helps to recover the radiation that would be dispersed towards the first wall 3a.

In accordance with a second embodiment illustrated in figure 2, the infrared emitters 4 and the reflector 5 are positioned in opposite sides with respect to the predefined direction along which the parisons 100 move forward.

In particular, the infrared emitters 4 are located near the first side wall 3a, while the reflector 5 is located near the second side wall 3b.

Also in this embodiment, the reflector 5 has the shape of a planar plate obtained by overlapping the metallic substrate 6 and the external layer 7, which completely surrounds the metallic substrate 6.

In an alternative embodiment (not shown), the reflector 5 has the shape of an inclined plate or multiple parabola.

In this way, the reflector 5 receives the radiation crossing the parisons 100 and part of the scattered radiation (that is, the radiation that does not reach the parisons 100) and conveys it towards the parisons 100 themselves.

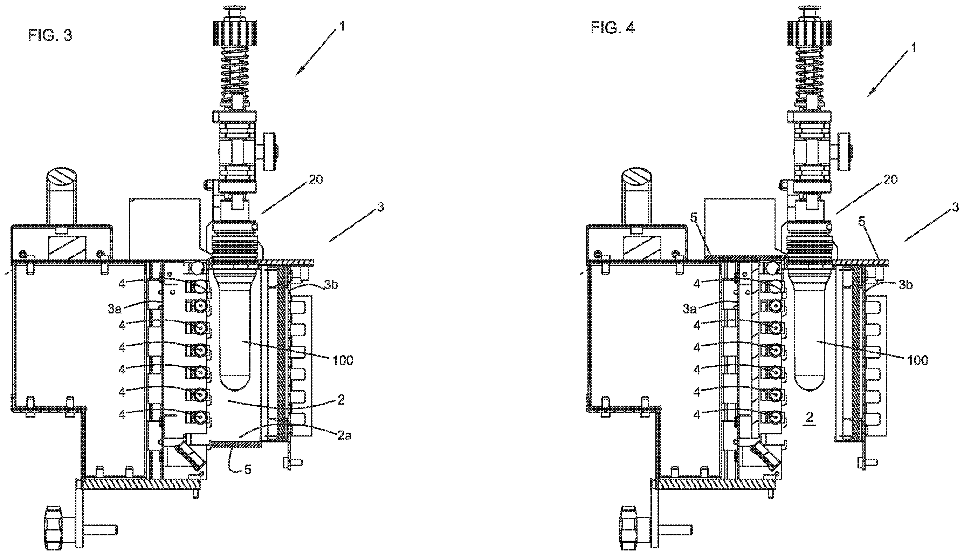

In accordance with a third embodiment shown in figure 3, the reflector 5 develops in a lower area 2a of the tunnel 2. In particular, the reflector 5 is positioned below the tunnel area 2 crossed by the parisons 100 moving forward along the predefined direction.

Also in this embodiment, the reflector 5 has the shape of a planar plate obtained by overlapping the metallic substrate 6 and the external layer 7. In an alternative embodiment (not shown), the reflector 5 has the shape of an inclined plate or multiple parabola.

In accordance with a fourth embodiment shown in figure 4, the reflector 5 develops at least partially near the edges of the upper opening of the box-like body 3 in such a way as to reflect in the tunnel 2 the radiation which would tend to exit through the upper opening (that lets the necks 100b of the parisons 100 pass).

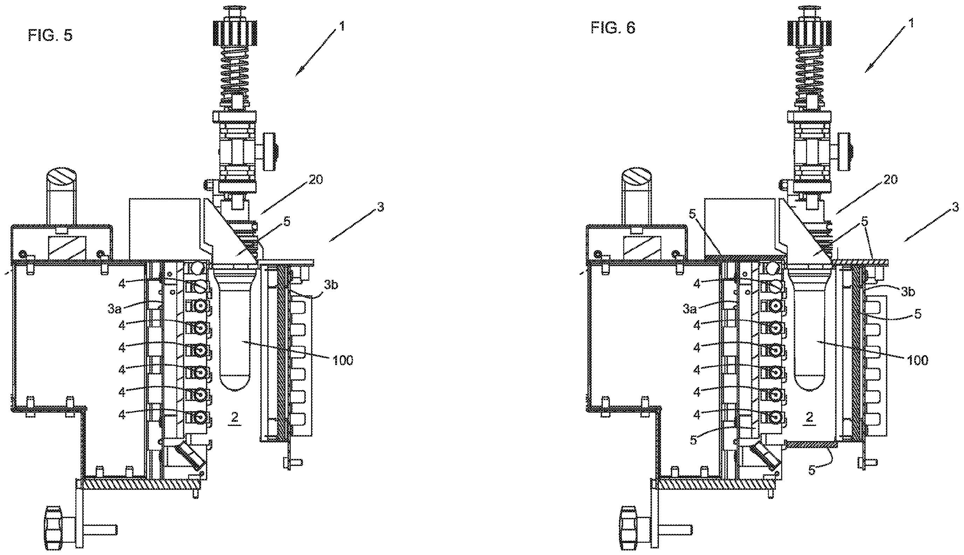

In accordance with a fifth embodiment shown in figure 5, there is a reflector 5 for each parison 100. In fact, the reflector 5 is integrally fixed to the corresponding gripping organ 20 of the parison 100.

Further embodiments are envisaged, obtained by combining two or more of the embodiments described above. In this way, several reflectors are present, located in different zones of the heating apparatus 1, which further improves the efficiency of heating the parisons 100.

For example, figure 6 shows a sixth embodiment which is given by the combination of the five embodiments illustrated in figures 1 to 5.

From the description given, the features of the heating apparatus for heating parisons of thermoplastic material according to the present invention appear clear, as do the advantages thereof.

In particular, having the reflector coated with an external layer of polysilazane or polysiloxane helps prevent the oxidation of the underlying metallic substrate, keeping the reflective properties substantially unaltered over time.

## Claims

1. Heating apparatus (1) for heating parisons (100) of thermoplastic material, comprising:
a tunnel (2) wherein the parisons (100) move forward along a predefined direction;
a plurality of infrared or near infrared emitters (4) located inside said tunnel (2) in such a way as to radiate the parisons (100) moving forward;
at least one reflector (5) having a metallic substrate (6), said reflector (5) being positioned in such a way as to receive at least partially the radiations emitted by the infrared emitters (4) to reflect them,
**characterised in that** the metallic substrate (6) of the reflector (5) is coated by an external layer (7) made of polysilazane or polysiloxane.

2. Heating apparatus (1) according to claim 1, wherein said metallic substrate (6) is constituted by one of the following elements: silver, gold, aluminium, platinum, rhodium, tantalum, molybdenum, tungsten.

3. Heating apparatus (1) according to claim 1 or 2, wherein said reflector (5) is positioned inside the tunnel (2).

4. Heating apparatus (1) according to claim 3, wherein said infrared emitters (4) and said reflector (5) are positioned in the same side with respect to the predefined direction along which the parisons (100) move forward.

5. Heating apparatus (1) according to claim 3, wherein said infrared emitters (4) and said reflector (5) are positioned respectively in opposite sides with respect to the predefined direction along which the parisons (100) move forward.

6. Heating apparatus (1) according to claim 3, wherein said reflector (5) develops in a lower zone (2a) of the tunnel (2).

7. Heating apparatus (1) according to any of the preceding claims, wherein said reflector (5) has the shape of a planar plate obtained by the overlapping of said metallic substrate (6) and of said external layer (7).

8. Heating apparatus (1) according to any of the claims 1 to 6, wherein said reflector (5) has the shape of a multiple parabola obtained by the overlapping of said metallic substrate (6) and of said external layer (7).

9. Heating apparatus (1) according to claim 1 or 2, further comprising a box-like body (3) delimiting said tunnel (2), said box-like body (3) having an opening configured to allow the neck (100b) of the parisons (100) that move forward in the tunnel (2) to remain outside said tunnel (2), said reflector (5) developing at least partially near said opening of the box-like body (3).

10. Heating apparatus (1) according to claim 1 or 2, further comprising a gripping organ (20) for each parison (100), said gripping organ (20) being operatively active on the neck (100b) of said parison (100) to support it while it moves forward in the tunnel (2), to each gripping organ (20) being integrally fixed a corresponding reflector (5).

11. Heating apparatus (1) according to any of the preceding claims, wherein said external layer (7) has a thickness comprised between 1 µm and 30 µm.

12. Heating apparatus (1) according to claim 11, wherein said external layer (7) has a thickness comprised between 1 µm and 5 µm.

13. Heating apparatus (1) according to any of the preceding claims, wherein said infrared emitters (4) are configured to emit radiations in the infrared or near infrared spectrum, that is with a wavelength comprised between 0.7 µm and 5 µm.

14. Use of a reflector (5) having a metallic substrate (6) and an external layer (7) made of polysilazane or polysiloxane to reflect the radiations in the infrared or near infrared spectrum inside a heating apparatus (1) according to any one of the claims 1 to 13 for heating parisons (100) of thermoplastic material.

## Patentansprüche

1. Vorrichtung (1) zur Erwärmung von Vorformlingen (100) aus thermoplastischem Material, umfassend:
einen Tunnel (2), in dem sich die Vorformlinge (100) entlang einer vordefinierten Richtung vorwärts bewegen;
eine Vielzahl von Infrarot- oder Nahinfrarotstrahlern (4), die innerhalb des Tunnels (2) so angeordnet sind, dass sie die sich vorwärts bewegenden Vorformlinge (100) bestrahlen;
mindestens einen Reflektor (5) aufweisend ein metallisches Substrat (6), wobei der Reflektor (5) derart positioniert ist, dass er die von den Infrarotstrahlern (4) emittierten Strahlungen zumindest teilweise empfängt, um sie zu reflektieren,
**dadurch gekennzeichnet, dass** das metallische Substrat (6) des Reflektors (5) mit einer Außenschicht (7) aus Polysilazan oder Polysiloxan beschichtet ist.

2. Erwärmungsvorrichtung (1) nach Anspruch 1, wobei das metallische Substrat (6) aus einem der folgenden Elemente besteht: Silber, Gold, Aluminium, Platin, Rhodium, Tantal, Molybdän, Wolfram.

3. Erwärmungsvorrichtung (1) nach Anspruch 1 oder 2, wobei der Reflektor (5) innerhalb des Tunnels (2) positioniert ist.

4. Erwärmungsvorrichtung (1) nach Anspruch 3, wobei die Infrarotstrahler (4) und der Reflektor (5) in Bezug auf die vordefinierte Richtung, entlang der sich die Vorformlinge (100) vorwärts bewegen, auf der gleichen Seite positioniert sind.

5. Erwärmungsvorrichtung (1) nach Anspruch 3, wobei die Infrarotstrahler (4) und der Reflektor (5) jeweils auf gegenüberliegenden Seiten in Bezug auf die vordefinierte Richtung positioniert sind, entlang der sich die Vorformlinge (100) vorwärts bewegen.

6. Erwärmungsvorrichtung (1) nach Anspruch 3, wobei sich der Reflektor (5) in einer unteren Zone (2a) des Tunnels (2) erstreckt.

7. Erwärmungsvorrichtung (1) nach einem der vorhergehenden Ansprüche, wobei der Reflektor (5) die Form einer ebenen Platte ausweist, die durch Überlappen des metallischen Substrats (6) und der äußeren Schicht (7) erhalten wird.

8. Erwärmungsvorrichtung (1) nach einem der Ansprüche 1 bis 6, wobei der Reflektor (5) die Form einer mehrfachen Parabel aufweist, die durch Überlappen des metallischen Substrats (6) und der äußeren Schicht (7) erhalten wird.

9. Erwärmungsvorrichtung (1) nach Anspruch 1 oder 2, ferner umfassend einen kastenartigen Körper (3), der den Tunnel (2) begrenzt, wobei der kastenartige Körper (3) eine Öffnung aufweist, die so ausgelegt ist, dass sie dem Hals (100b) der Vorformlinge (100), die sich im Tunnel (2) nach vorne bewegen, ermöglicht, außerhalb des Tunnels (2) zu bleiben, wobei sich der Reflektor (5) zumindest teilweise in der Nähe der Öffnung des kastenartigen Körpers (3) erstreckt.

10. Erwärmungsvorrichtung (1) nach Anspruch 1 oder 2, ferner umfassend ein Greifelement (20) für einen jeden Vorformling (100), wobei das Greifelement (20) betriebswirksam auf den Hals (100b) des Vorformlings (100) ist, um ihn zu stützen, während er sich im Tunnel (2) vorwärts bewegt, wobei an einem jeden Greifelement (20) ein entsprechender Reflektor (5) fest befestigt ist.

11. Erwärmungsvorrichtung (1) nach einem der vorhergehenden Ansprüche, wobei die äußere Schicht (7) eine Dicke zwischen 1 µm und 30 um aufweist.

12. Erwärmungsvorrichtung (1) nach Anspruch 11, wobei die äußere Schicht (7) eine Dicke zwischen 1 µm und 5 µm aufweist.

13. Erwärmungsvorrichtung (1) nach einem der vorhergehenden Ansprüche, wobei die Infrarotstrahler (4) so ausgelegt sind, dass sie Strahlungen im infraroten oder nahen Infrarotspektrum emittieren, das heißt mit einer Wellenlänge zwischen 0,7 µm und 5 µm.

14. Verwendung eines Reflektors (5) aufweisend ein metallisches Substrat (6) und eine Außenschicht (7) aus Polysilazan oder Polysiloxan zum Reflektieren der Strahlungen im infraroten oder nahen infraroten Spektrum innerhalb einer Erwärmungsvorrichtung (1) nach einem der Ansprüche 1 bis 13 zur Erwärmung von Vorformlingen (100) aus thermoplastischem Material.

## Revendications

1. Appareil de chauffage (1) pour chauffer des paraisons (100) en matériau thermoplastique, comprenant :
un tunnel (2) dans lequel les paraisons (100) se déplacent vers l'avant le long d'une direction prédéfinie ;
une pluralité d'émetteurs infrarouges ou infrarouges proches (4) situés à l'intérieur dudit tunnel (2) de manière à irradier les paraisons (100) se déplaçant vers l'avant ;
au moins un réflecteur (5) comportant un substrat métallique (6), ledit réflecteur (5) étant positionné de manière à recevoir au moins partiellement les rayonnements émis par les émetteurs infrarouges (4) pour les réfléchir,
**caractérisé en ce que** le substrat métallique (6) du réflecteur (5) est revêtu d'une couche externe (7) en polysilazane ou polysiloxane.

2. Appareil de chauffage (1) selon la revendication 1, dans lequel ledit substrat métallique (6) est constitué par l'un des éléments suivants : argent, or, aluminium, platine, rhodium, tantale, molybdène, tungstène.

3. Appareil de chauffage (1) selon la revendication 1 ou 2, dans lequel ledit réflecteur (5) est positionné à l'intérieur du tunnel (2).

4. Appareil de chauffage (1) selon la revendication 3, dans lequel lesdits émetteurs infrarouges (4) et ledit réflecteur (5) sont positionnés du même côté par rapport à la direction prédéfinie le long de laquelle les paraisons (100) avancent.

5. Appareil de chauffage (1) selon la revendication 3, dans lequel lesdits émetteurs infrarouges (4) et ledit réflecteur (5) sont positionnés respectivement dans des côtés opposés par rapport à la direction prédéfinie le long de laquelle les paraisons (100) avancent.

6. Appareil de chauffage (1) selon la revendication 3, dans lequel ledit réflecteur (5) se développe dans une zone inférieure (2a) du tunnel (2).

7. Appareil de chauffage (1) selon l'une quelconque des revendications précédentes, dans lequel ledit réflecteur (5) a la forme d'une plaque plane obtenue par la superposition dudit substrat métallique (6) et de ladite couche externe (7).

8. Appareil de chauffage (1) selon l'une quelconque des revendications 1 à 6, dans lequel ledit réflecteur (5) a la forme d'une parabole multiple obtenue par la superposition dudit substrat métallique (6) et de ladite couche externe (7).

9. Appareil de chauffage (1) selon la revendication 1 ou 2, comprenant de plus un corps en forme de boîte (3) délimitant ledit tunnel (2), ledit corps en forme de boîte (3) comportant une ouverture configurée pour permettre au col (100b) des paraisons (100) qui se déplacent vers l'avant dans le tunnel (2) de rester à l'extérieur dudit tunnel (2), ledit réflecteur (5) se développant au moins partiellement près de ladite ouverture du corps en forme de boîte (3).

10. Appareil de chauffage (1) selon la revendication 1 ou 2, comprenant de plus un organe de préhension (20) pour chaque paraison (100), ledit organe de préhension (20) étant actif de manière fonctionnelle sur le col (100b) de ladite paraison (100) pour la supporter pendant qu'elle se déplace vers l'avant dans le tunnel (2), un réflecteur correspondant (5) étant intégralement fixé à chaque organe de préhension (20).

11. Appareil de chauffage (1) selon l'une quelconque des revendications précédentes, dans lequel ladite couche externe (7) a une épaisseur comprise entre 1 et 30 µm.

12. Appareil de chauffage (1) selon la revendication 11, dans lequel ladite couche externe (7) a une épaisseur comprise entre 1 et 5 µm.

13. Appareil de chauffage (1) selon l'une quelconque des revendications précédentes, dans lequel lesdits émetteurs infrarouges (4) sont configurés pour émettre des rayonnements dans le spectre infrarouge ou infrarouge proche, c'est-à-dire avec une longueur d'onde comprise entre 0,7 et 5 µm.

14. Utilisation d'un réflecteur (5) comportant un substrat métallique (6) et une couche externe (7) en polysilazane ou polysiloxane pour réfléchir les rayonnements dans le spectre infrarouge ou infrarouge proche à l'intérieur d'un appareil de chauffage (1) selon l'une quelconque des revendications 1 à 13 pour chauffer des paraisons (100) en matériau thermoplastique.
